# EUROPEAN PATENT APPLICATION

(11) **EP 4 826 552 A1**
(43) Date of publication of application: **21.10.2026**
(21) Application number: 26167291.9
(22) Date of filing: 24.03.2026
(51) Int. Cl.: G06F 13/10

(54) **EMULATION METHOD, CORRESPONDING PROCESSING DEVICE AND COMPUTER PROGRAM PRODUCT FOR EMULATING ONE PERIPHERAL**

(30) Priority: 18.04.2025 IT 202500008838
(71) Applicant: STMicroelectronics International N.V., 1228 Plan-les-Ouates, Geneva (CH)
(72) Inventor: CATALANO, Dario, I-20131 Milano (IT); NOTARIO, Agata, I-70022 Altamura (Bari) (IT)
(74) Representative: Buzzi, Notaro & Antonielli d'Oulx S.p.A.

(57) **Abstract**

A peripheral (1000) configured to cooperate with a data processing device (D) including a processor unit (CPU) is emulated via an emulating peripheral (100) by:
emulating (T_{XEM}, R_{XEM}) data output (Tx) and data input (Rx) functions of the peripheral (1000), and
emulating data exchange between the peripheral (1000) and the processor unit (CPU) via an emulated replica of a register memory map (1000RMM) of the peripheral (1000).

The data processing device (D) advantageously includes a Generic Timer Module, GTM (100) with Multi-Channel Sequencer, MCS (200), and emulation includes:
producing, via input and output modules in the GTM (100), emulating data output (T_{XEM}) and emulating data input (R_{XEM}) functions of the emulating peripheral (100), wherein the emulating data output (T_{XEM}) and emulating data input (R_{XEM}) functions emulate data output (Tx) and data input (Rx) functions of the peripheral (1000), and
producing via the Multi-Channel Sequencer, MCS (200) in the Generic Timer Module, GTM (100) an emulated register memory map of the emulating peripheral (100), wherein the emulated register memory map includes the emulated replica of the register memory map (RMM, 1000RMM) of the peripheral (1000).

## Description

### Technical field

The description relates to emulation techniques.

Solutions as described herein can be applied, for instance, to "automotive" semiconductor devices, that is (integrated circuit, IC) semiconductor devices for use in the automotive body/gateway application market.

### Description of the related art

Processor devices such as microcontrollers, MCUs or microprocessors, MPUs used in the automotive sector can rely on several instances of (low-speed) data processing IPs.

The designation IP core (briefly, IP) applies to a functional block of logic or data used, for instance, to make a field-programmable gate array, FPGA or application-specific integrated circuit, ASIC for a product.

Essentially, an IP is a reusable unit of logic or integrated circuit, IC layout design.

This designation stems from the fact that such unit amounts to intellectual property (IP) of a party and may be licensed by others for use in their own ICs and semiconductors.

Local Interconnect Network, LIN (a network protocol used for single-wire communication between components in modern vehicles), Universal Asynchronous Receiver-Transmitter, UART (a hardware communication protocol that uses asynchronous serial communication with configurable speed), Serial Peripheral Interface, SPI (an interface bus commonly used to send data between microcontrollers and small peripherals such as shift registers, sensors, and Secure Digital, SD cards), Controller Area Network, CAN (a vehicle bus standard designed to enable efficient communication primarily between electronic control units (ECUs) or PSI5 (an interface used to connect multiple sensors to electronic control units, ECUs) are a non-exhaustive list of possible contexts of use of such low-speed data processing IPs.

The associated peripherals can be used, for example, to exchange data related to non-critical automotive body tasks such as side-window roll down, air-conditioning, front lights, and so on.

It is otherwise noted that referring to the automotive sector is essentially by way of example and shall not be construed in a limiting sense of possible applications of solutions as described herein.

In possible contexts of use as exemplified in the foregoing, users (customers) may have their own specific applications that - in most instances - may involve a specific hardware, HW implementation in turn involving a number of peripherals that may not fit, for example, with a given MCU/MPU portfolio.

Users are correspondingly desirous of increasing the number of peripherals and/or proprietary gateway protocol implementations at their disposal with processor devices including a central processing unit, CPU configured to see an emulated peripheral as a real peripheral mapped at a given address.

In that way, customer code (namely customer software, SW) already written for a same peripheral IP may expectedly remain unchanged, with just peripheral register location addresses changed according to a specific customer application.

Solutions emulating (slow-speed) peripherals already exist that however suffer from various drawbacks that adversely affect user expectations:
reduced configurability (if any) of the device to meet user needs; and/or
the number of emulated peripherals is fixed with no possibility to add new peripherals unless the device is re-designed.

There is a need in the art to contribute in providing improved solutions resulting in crucial cost and time saving benefits for users, facilitating them in porting their application through different types of System-on-Chip, SoC.

### Object and summary

According to one or more solutions as described herein, such an object can be achieved via a (computer implemented) method having the features set forth in the claims that follow.

Solutions as described herein can also relate to a processor device (a microcontroller unit, MCU, or microprocessor unit, MPU for instance) configured to implement such a method.

Solutions as described herein can also relate to a corresponding computer program product loadable in the memory of at least one processing circuit (e.g., a computer such as a microcontroller unit, MCU or microprocessor unit, MPU) and comprising instructions which, when executed by a computer, cause the computer to carry out the steps of the method described herein.

As used herein, reference to such a computer program product is understood as being equivalent to reference to computer-readable data carrier having stored thereon that computer program product in order to co-ordinate implementation of the method as described herein.

The claims are an integral part of the technical teaching provided herein in respect of the embodiments.

Solutions as described herein provide the ability of emulating peripherals in respect of both their functions and their behavior in terms of memory-mapped registers.

Solutions as described herein facilitate developing software, SW code that is reconfigurable run-time and is suited to emulate, along with (low-speed) peripheral functions, also the register memory map of the emulated peripheral or peripherals: advantageously, this can be via a Multi-Channel Sequencer, MCS (a programmable section in a Generic Timer Module, GTM) operating on a bit-field by bit-field basis within a specific shared section of a shared static random-access memory, SRAM in a GTM.

A concept that underlies various solutions as described herein is to use a Generic Timer Module, GTM (or a similar co-processor) within a processor - an MCU/MPU device, for instance - to emulate (potentially slow) peripherals, up to a register-mapped interface.

Adopting solutions as described herein facilitates porting software for customer applications across different devices in so far as applications can simply replace the starting address of a memory-mapped real IP to a new address subset, with emulated IPs placed within a common static random-access memory, SRAM (essentially a RAM that preserves the saved data as long as the power is on) .

Solutions as described herein can be included as part of a comprehensive software, SW package library alongside with a processing device such as microcontroller unit, MCU or microprocessor unit, MPU.

Solutions as described herein can offer a number of advantages.

For instance, customer code (a low-level driver, for instance) can be kept notionally untouched, in so far as, for instance, a Multi-Channel Sequencer, MCS (a programmable section in a Generic Timer Module, GTM) can emulate completely the memory-mapped registers of real peripherals. Software applications should be modified just in their overall setup section, where a starting address of IPs is set so that porting from various devices to a platform suited to emulate fully real peripherals becomes easier and faster.

Solutions as proposed herein thus provide a method of emulating via an emulating peripheral at least one peripheral configured to be coupled to a data processing device including a processor unit.

Reference to a peripheral "configured to be coupled" to a data processing device including a processor unit is intended to highlight the fact that users of solutions as proposed herein are given a tool capable of possibly emulating further (slow-speed) peripherals beyond those that are physically available on a device.

Solutions as described herein involve emulating (via an emulating peripheral) both of:
data output and data input functions of at least one peripheral being emulated, and
data exchange between the at least one peripheral being emulated and the processor unit via an emulated replica of a register memory map of the at least one peripheral being emulated.

Solutions as described herein are not limited to emulating "physical" peripherals that are included in a data processing device, but can be applied also to peripherals that are not per se included in the processing device.

By way of example, the device may include a CAN port, a SIUL module and a GTM module (as discussed in the following) and solutions as described herein facilitate emulating (via GTM, for instance) a physical LIN peripheral that is not present in the device.

### Brief description of the annexed figures

One or more embodiments will now be described, by way of example only, with reference to the annexed figures, wherein:
Figure 1 is a general functional representation of a Generic Timer Module, GTM within a processor;
Figure 2 illustrates a possible physical implementation of a GTM as represented in Figure 1;
Figure 3 is a diagram illustrative of a concept that underlies emulation solutions as described herein; and
Figure 4 is a diagram illustrative of a microcontroller configured to implement solutions as described herein.

The figures are drawn to clearly illustrate relevant aspects of the solutions described herein and are not necessarily drawn to scale.

The edges of features drawn in the figures do not necessarily indicate the termination of the extent of the feature.

### Detailed description

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular configurations, structures, or characteristics may be combined in any adequate way in one or more embodiments.

The headings/references used herein are provided merely for convenience and hence do not define the extent of protection or the scope of the embodiments.

Unless the context indicates otherwise, like parts or elements are indicated throughout the figures annexed herein with like references/numerals and a corresponding description will not be repeated for the sake of brevity.

For the sake of simplicity and ease of explanation, a same designation may be applied throughout this description to designate:
a node or line as well as a signal occurring at that node or line;
a component or unit as well as parameters thereof.

Also, when it is mentioned that an element is "connected to" or "coupled to" another element, it should be understood that an element may be coupled directly to another element or that still another element may be interposed therebetween.

On the contrary, when it is possibly mentioned that an element is "connected directly to" or "coupled directly to" another element, it should be understood that still another element is not interposed therebetween.

By way of introduction to the present detailed description, it is observed that processor devices such as MCUs or MPUs as used, for instance, in the automotive sector ("automotive devices") may include a Generic Timer Module, GTM that can be exploited to give to a user (customer) the possibility of emulating various (slow) peripherals (as IPs) up to a hardware/software, HW/SW interface, that is a register memory-mapped interface.

Possible SW reworking involved in porting a user application to a "new" device is a point to be considered when adopting such a device for superseding older instances.

Reducing (and notionally dispensing with) software porting effort is desirable. To that effect, solutions as described herein facilitate a user (customer) in setting up a different addressing schema of (all) the (low-speed) peripherals as desired, with customer applications and low-level drivers left otherwise unchanged (untouched).

A communication peripheral intended to manage a transmission/reception (Tx/Rx) line will be referred to in the following as an example of such a peripheral.

Those of skill in the art will otherwise appreciate that solutions as described herein can be applied to more complex peripherals (interfaces): a communication peripheral intended to manage a transmission/reception line thus merely represents a non-limiting example made for the sake of simplicity and ease of understanding.

Solutions as described herein by way of example can rely on the fact that a Generic Timer Module, GTM - as already available in an "automotive" processing device - include a programmable section, currently referred to as a Multi-Channel Sequencer, MCS, which facilitates programming a GTM to emulate both (low-speed) peripherals (using blocks referred to Timer Input Module, TIM or Timer Output Module, ATOM, for instance, within a GTM) and register-mapped control blocks for all emulated peripherals mentioned above.

A GTM has an in-built Advanced Router Unit (ARU) that can be used to exchange specific data between submodules without CPU interactions. One or more ARU-connected Timer Output Modules (ATOMs), which are part of the GTM, are able to generate complex output signals without CPU interactions.

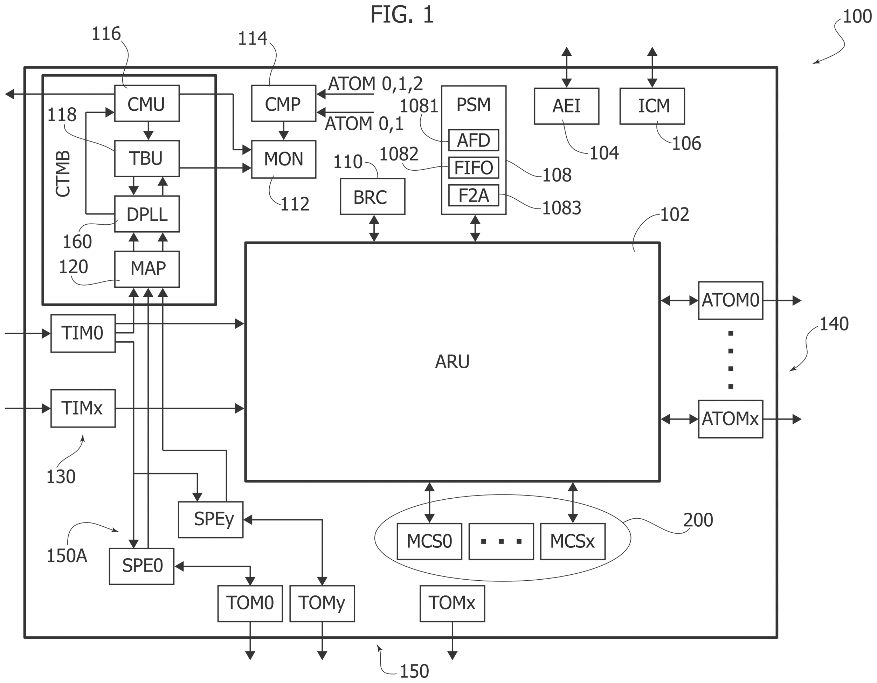

A Clock Management Unit (CMU) is responsible for clock generation of the GTM. A Configurable Clock Generation Subunit (CFGU) provides clock sources for the GTM submodules such as TIM, TBU, MON and ATOM as further discussed in the following in connection with Figure 1.

By resorting to solutions as described herein, users (customers) are not required to modify their SW code (already working) when migrating from one HW platform to a platform (device) as described herein, which can emulate notionally all peripherals within a GTM: a different set-up in the starting addresses when moving from "real" peripherals to fully emulated peripherals will generally do in so far as a GTM (or a similar co-processor such as a SIUL, for instance) can be employed to emulate both communication functions and memory-mapped register interfaces.

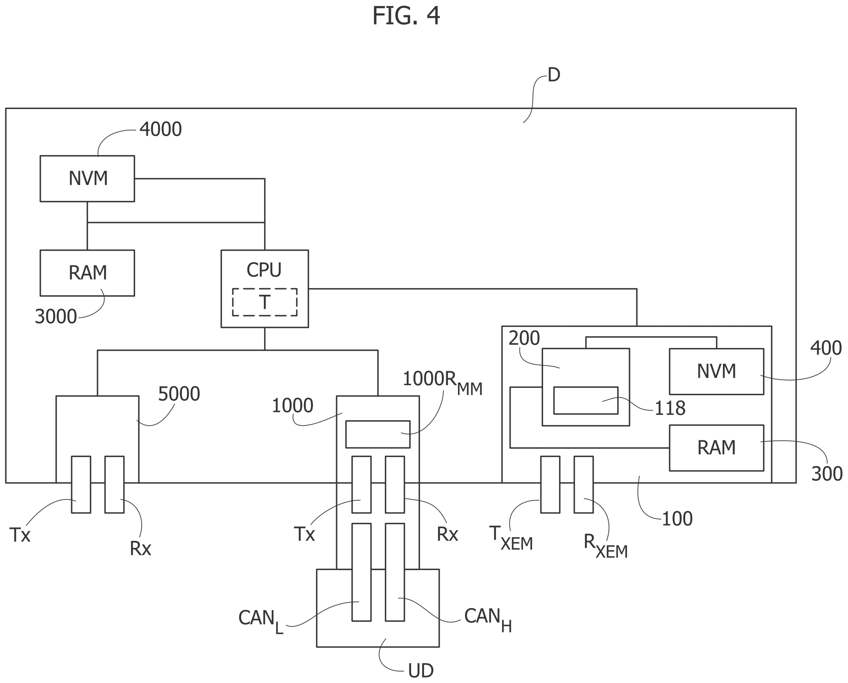

The diagram of Figure 1 a functional representation of a Generic Timer Module, GTM 100 within a processor (such as the processor device labeled as D in Figure 4, which in Figures 1 to 3 is not visible in its entirety for simplicity).

In general terms (and in a manner known per se to those of skill in the art) the GTM circuitry 100 includes a plurality of (sub)modules that can be regarded as including:
infrastructure submodules;
input submodules;
output submodules;
(at least) one core submodule; and
specialized submodules.

In the (purely exemplary) case illustrated in Figure 1 the infrastructure submodules include:
an in-built Advanced Router Unit (ARU) 102 that can be used to exchange specific data between sub-modules without CPU interactions;
an Automotive Electronics Interface, AEI 104
an Input Concentrator Module, ICM 106
a Parameter Storage Module, PSM 108 (in turn including an AEI-to-FIFO Data Interface, AFD 1081, a first-in first-out, FIFO memory 1082, and a F2A bridge 1083) which can be used to bring in the master-in-slave-out, MISO data to the GTM from an I/O processor;
a BroadCast, BRC module (including a number x of channels) 110;
a Monitor, MON module 112;
a Compare, CMP module 114 (receiving input from ATOM and TOM submodules as discussed in the following);
a Common Time-Base module, CTBM in turn comprising a Clock Management Unit, CMU 116, a Time Base Unit, TBU 118 and an Input Mapping Module, MAP 120 plus a Digital Phase Locked Loop, DPLL 160 (interposed between the TBU unit 118 and the MAP module 120) which, for the purposes herein, can be regarded as specialized submodule.

In the exemplary case illustrated in Figure 1, the input submodules include a plurality of Timer Input Modules TIM0 to TIMx (8 channels each, for instance) collectively indicated as 130.

In the exemplary case illustrated in Figure 1, the output submodules include:
a set of ARU-connected Timer Output Modules (ATOMs) ATOM0 to ATOMx (8 channels each, for instance), collectively indicated as 140, configured to generate complex output signals without CPU interactions;
a set of Timer Output Modules (TOMs) TOM0 to TOMy (16 channels each, for instance), collectively indicated as 150, configured to interact with the MAP module 120 and respective ones of the Timer Input Modules TIM0 to TIMx 130 via corresponding Signal Pattern Evaluation, SPE sub-modules SPE0 to SPEy (1 channel each) collectively indicated as 150A.

The GTM 100 of Figure 1 includes, as core submodules, plural Multi-Channel Sequencer, MCS instances MCS0, MCS1, MCS2, ... MCSx (8-channel, for instance) collectively indicated as 200 that are configured to handle a real register-mapped interface using a portion of the memory available in the GTM.

As noted, for the purposes herein, a specialized submodule in the exemplary GTM illustrated in Figure 1 is represented by the DPLL 160 (interposed between the TBU 118 and the MAP 120).

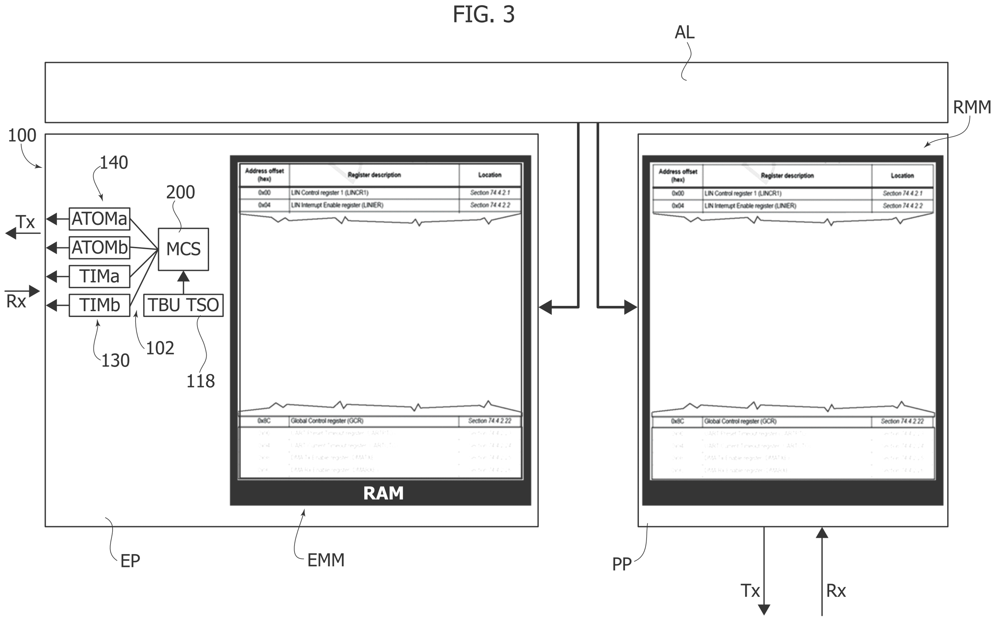

With the exception of the discussion that follows (primarily in connection with Figure 3 and Figure 4), the overall structure of a GTM 100 illustrated in Figure 1 can be regarded as per se conventional in the art.

In that respect, documents such as the description of SPC58 N line MCUs in the free whitepaper from ST available at the time of filing the present application at the URL www.st.com/en/automotivemicrocontrollers/spc58-n-line-mcus.html can be referred to for more detailed information.

Solutions as described herein rely on the recognition that TIM, ATOM and TOM sub-modules - and other IP sub-modules within a GTM - can emulate input and output functions of (slow) peripherals, while a Multi-Channel Sequencer, MCS can fully implement memory-mapped register functionality in conjunction with a SRAM in a GTM.

A MCS can thus facilitate replicating register behavior of a "real" peripheral. In that way, an application will simply have to replace the starting address of all the memory-mapped real IPs to a new subset of addresses, where emulated IPs are placed within the GTM common SRAM.

In the functional representation of Figure 1, a Generic Timer Module, GTM 100 is illustrated where one or more MCS instances MCS0, MCS1, MCS2, ... MCSx (8-channel, for instance) - collectively indicated as 200 - can be configured to handle a real register-mapped interface using memory space available in the GTM.

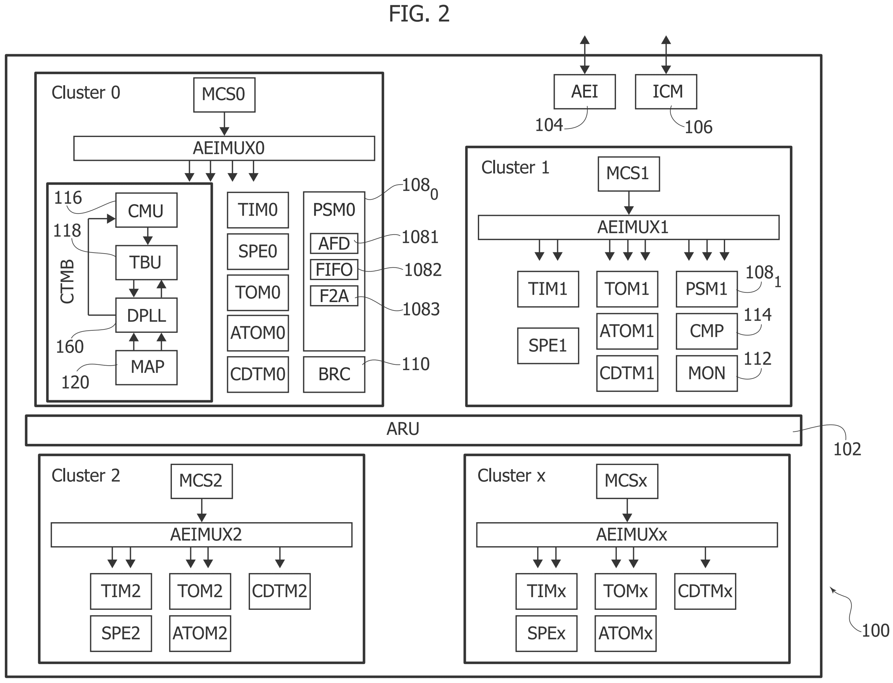

Figure 2 illustrates a possible physical implementation of the GTM 100 of Figure 1, by highlighting how the modules therein can be arranged ("clustered", in plural clusters indicated by Cluster 0, Cluster 1, Cluster 2, ..., Cluster x) by providing two replicas of a same peripheral memory map.

Figure 2 highlights the role of respective MCS instances MCS0, MCS1, MCS2, ... MCSx in the clusters Cluster 0, Cluster 1, Cluster 2, ..., Cluster x by showing a possible functional relationship/connection layout of those MCS instances.

In Figure 2, parts and elements already introduced in connection with Figure 1 are indicated using the same reference numerals and symbols that appear in Figure 1 and a detailed description will not be repeated for brevity.

Also, in order to avoid making the graphical representation unnecessarily complex, certain blocks in Figure 2 are simply labelled with their designation without repeating certain numerical references appearing in Figure 1.

In Figure 2, Automotive Electronics Interface, AEI multiplexers AEIMUX0, AEIMUX1, AEIMUX2, and AEIMUXx are illustrated that facilitate interfacing the MCS instances MCS0, MCS1, MCS2, ... MCSx, with other (sub)modules in the GTM 100.

For clarity, in Figure 2:
two instances of Parameter Storage Module, PSM (108 in Figure 1) associated with the MCS instances MCS0 and MCS1 are indicated as 108₀ and 108₁, and
cluster dead time modules, CDTM0, CDTM1, CDTM2, and CDTMx are also illustrated for the various clusters CLUSTER 0, CLUSTER 1, CLUSTER 2, and CLUSTER x.

Figure 3 is a general representation of how, according to solutions as described herein, an application layer AL in a processor (not visible in its entirety for simplicity) can be caused to interact (both in transmission Tx and reception Rx of digital data signals) with:
a real "physical" (hardware) peripheral PP, illustrated on the right-hand side of Figure 3, exposing its own register memory map RMM: this peripheral may be, just to mention one possible example, a Local Interconnect Network Flexible, LINFLex peripheral or a Controller Area Network, CAN interface (as illustrated in Figure 4 discussed in the following);
a GTM-emulated peripheral (hereinafter referred to also as "emulating") EP, illustrated on the left-hand side of Figure 3, exposing an emulated register memory map EMM that emulates the register memory map RMM of the real peripheral PP.

As otherwise conventional in the art, both memory maps RMM, EMM may expose in an orderly fashion information such as address offset (hex, for instance), register description and location for memory registers where memory-mapped application data are stored both for a real, physical peripheral and for a corresponding GTM-based "emulating" peripheral.

It is once more noted that solutions as proposed herein thus provide a method of emulating via an emulating peripheral even peripherals beyond those that are physically available on a device.

As illustrated in Figure 3, the emulated register memory map EMM can be hosted on RAM (SRAM) memory space that is available in the GTM and is managed via a MCS instance 200 that has associated a respective Time Base Unit, TBU 118 and interacts via ARU 102 (not represented as a block for simplicity) with TIM and ATOM instances 130 and 140.

Figure 4 is a diagram illustrative of processing circuitry (an MCU/MPU device D, for instance) suited to be implemented via solutions as described herein.

The circuitry of the device D is built around a central processing unit, CPU (including a timer feature T) assumed to interface with a plurality of (hardware) peripherals.

For simplicity, only one such peripheral 1000 is exemplified as a Controller Area Network, CAN peripheral intended to exchange digital data signals (for generality, both transmission Tx and reception Rx are assumed) with a user device UD over a CAN bus including "high" and "low" bus pins CAN_{H} and CAN_{L}.

It is once more recalled that solutions as described herein can be applied to more complex peripherals (interfaces) than a communication peripheral intended to manage a transmission/reception (Tx/Rx) line; such a communication peripheral is in fact referred to herein merely by way of non-limiting example for the sake of simplicity and ease of understanding: the CAN peripheral 1000 is thus just a possible instance of a real "physical" peripheral having its own register memory map 1000RMM.

The processing circuitry D illustrated in Figure 4 also includes memory features such as a Random Access Memory, RAM 3000 and a Non-Volatile Memory 4000 plus a System Integration Unit Lite, SIUL, 5000 namely a module that controls MCU pad configuration, ports, general-purpose input and output signals and external interrupts with trigger event configuration.

The possible use of the SIUL 5000 for emulation purposes (as a possible alternative to GTM-based emulation) will be further discussed in the following.

Figure 4 shows that the processing circuitry D can be configured to include GTM-based emulating peripherals; these peripherals can take advantage of the presence of a Generic Timer Module, GTM 100 (implemented in the "clustered" fashion illustrated in Figure 2, for instance) that may be already be present in a device D such as an MCU or MPU.

Such a GTM 100 is suited to be configured as illustrated on the left-hand side of Figure 3, namely by providing two replicas of a same peripheral memory map so that (the or each) GTM-based emulating peripheral exposes an emulated register memory map EMM that emulates the register memory map RMM of the real peripheral (here, by way of example, a CAN peripheral 1000) so that the peripheral emulated via the GTM 100 exposes an emulated register memory map that emulates the register memory map 1000RMM of the CAN peripheral 1000.

As illustrated on the left-hand side of Figure 3, the GTM-based emulating peripheral 100 includes a Multi-Channel Sequencer, MCS feature 200 with an associated Time Base Unit, TBU 118 and the emulated register memory map EMM can be hosted on RAM (SRAM) memory space 300 that is available along with NVM memory space 400 in the GTM 100 and is managed via the MCS instance 200.

While illustrated as a separate entity for clarity and simplicity of explanation, the RAM memory space 300 and the NVM memory space 400 of the GTM may in fact be implemented as parts of the RAM memory space 3000 and the NVM memory space 4000 of the processing circuitry D as a whole.

To summarize, solutions as described herein are exemplary of emulating one or more (hardware) peripherals (see the CAN peripheral 1000, by way of example) of a data processing device D via GTM-based emulating peripheral in the GTM 100.

Emulation of the "real" peripheral 1000 via the emulating peripheral (in the GTM 100) includes:
emulating (see the data flows T_{XEM} and R_{XEM} in Figure 4) output data flow and input data flow functions (see the data flows Tx and Rx in Figure 4) of the (at least one) "physical" peripheral 1000, and
emulating (via the MCS feature 200) data exchange between the peripheral 1000 and the central processing unit CPU of the processor device D via an emulated replica (see EMM in Figure 3) of a register memory map (see RMM in Figure 3 and 1000RMM in Figure 4) of the physical peripheral 1000.

In solutions as described herein, the data processing device D advantageously includes a Generic Timer Module, GTM 100 with a Multi-Channel Sequencer, MCS feature 200, and emulation includes:
producing, via input and output modules within the GTM 100 (see, for instance the input modules TIM0, ..., TIMx and the output module TOM0, ...TOMy, ... TOMx; ATOM0, ..., ATOMx in Figures 1 and 2), emulating data output T_{XEM} and emulating data input R_{XEM} functions of the GTM-based emulating peripheral 100, wherein the emulating data output T_{XEM} and emulating data input R_{XEM} functions emulate data output Tx and data input Rx functions of the physical peripheral 1000, and
producing via the Multi-Channel Sequencer, MCS feature 200 in the Generic Timer Module, GTM 100 an emulated register memory map RMM of the emulated peripheral 100, wherein the emulated register memory map EMM includes the aforesaid emulated replica EMM of the register memory map RMM, 1000RMM of the physical peripheral 1000.

As discussed, each HW peripheral such as the CAN peripheral 1000 has associated therewith a driver (namely, software code to be loaded in a non-volatile memory, NVM of the processor device D) in order to configure various parameters that facilitate adequate communication between the HW peripheral and the CPU in the device D.

Operation of an arrangement as illustrated by way of example in Figures 3 and 4 takes advantage of a GTM such as the GTM 100 being a large scalable timer with a modular design and a central routing, originally intended to unload the I/O core by allowing tasks to run independently once set up at MCU initialization.

In comparison with conventional solutions already available to emulate communication protocols, solutions as proposed herein also implement register emulated interfaces: while the emulated functionality is essentially the same, only the start address is changed, with the MCS feature replicating register behavior as in the case of a "real" peripheral. This facilitates emulating, for instance, up to four peripherals for each GTM cluster, with, for instance, up to nine clusters for each GTM.

Solutions as proposed herein turn out to be more cost-effective than using an otherwise standard embedded core in conjunction with GPIOs or emulating a peripheral using a CPU (which is hardly practicable, both in terms of cost and resource usage).

Solutions as proposed herein can be applied also to higher speed IPs, if compatible with GTM core frequency.

By way of summary, referring again to the automotive sector (this is essentially by way of example and shall not be construed in a limiting sense of possible applications of solutions as described herein):
a microcontroller for automotive applications is currently equipped with one or more cores (Central Processing Units, CPUs, such as one or more microcontrollers), memories, communication interfaces (cross-bars) and configured to be coupled with peripherals;
these peripherals facilitate performing different types of processing functions in a microcontroller and/or outside a microcontroller when the peripheral is connected to external devices;
emulating the behavior of a hardware, HW peripheral using software, SW is generally known; emulation focuses on the behavior of the peripheral with respect to other parts of the microcontroller or with respect to external devices connected to it: for instance, the behavior of the peripheral in exchanging data that are input to the peripheral and output from the peripheral can be emulated; and
hardware, HW peripherals used to connect a microcontroller to external devices can be emulated on some pins (for example General Purpose Input/Output, GPIO pins) of the microcontroller in order to obtain on these pins a behavior in handling input and output signals that is virtually identical to the input of the HW peripheral that is emulated; for instance, it is possible to emulate on certain pins of the microcontroller different types of HW peripherals: just to make an example, changing the emulation SW facilitates emulating on a same pair of pins a Controller Area Network, CAN peripheral or a Local Interconnect Network, LIN peripheral.

Emulation as discussed previously involves loading in a non-volatile memory, NVM of the microcontroller a driver for each HW peripheral. Such a driver comprises software code - a computer program (product) - that facilitates a used in configuring various parameters for correct communication between the hardware, HW peripheral and an associated processor, a CPU, for instance.

That kind of emulation per se may not suffice to facilitate emulating adequately operation of a peripheral.

In fact, in addition to reproducing the basic behavior in respect of (emulated) input and output data, such a driver should desirably facilitate a user in configuring various parameters involved in adequate communication between the pins that are intended to be used for emulation purposes of a HW peripheral and a CPU.

This applies, for instance, to various functions that are expected to be managed by the driver (for example, error reporting, confirmation of correct reception, and so on) that play a role in facilitating adequate operation of an emulated HW peripheral.

As a result, a dedicated SW driver should be provided in order to facilitate adequate operation of an emulated HW peripheral: it noted that such a driver is conventionally different from the driver that may be already in place (already used) for adequate operation of a HW peripheral.

Solutions as proposed herein address (and solve) the problem of emulating a HW peripheral with an emulation SW that can use the same driver already proven to facilitate adequate operation of a HW peripheral (that is, normal intended use/operation of the HW peripheral) without any additional dedicated driver involved.

Solutions proposed herein as already discussed previously make it possible to use emulation SW that emulates i) the behavior of data transfer to and from a HW peripheral, and ii) the behavior of the internal registers of the HW peripheral.

In that way, a same driver of the HW peripheral can facilitate adequate operation of the emulated peripheral.

In that respect it is once more recalled that solutions as proposed herein facilitate emulating via an emulating peripheral even peripherals beyond those that are physically available on a device.

To summarize, solutions as described herein may advantageously comprise storing in memory space 3000 of a processing device such as the device D of Figure 4, memory-mapped application data RMM for at least one peripheral such as the CAN peripheral 1000. These memory-mapped application data RMM can be stored in that memory space 3000 starting from a starting address of memory-mapped data.

Solutions as described herein may advantageously contemplate storing in memory space 300 of the GTM-based emulating peripheral 100 emulated application data EMM that replicate the application data for the at least one "physical" peripheral 1000: the emulated application data EMM are stored in the memory 300 of the emulating peripheral 100 starting from a "new" starting address that replaces the starting address of the memory-mapped data RMM of the "physical" peripheral 1000.

The data processing device D may comprise a driver module (as software stored in a non-volatile memory, NVM 4000) that is configured to operate adequately based on the memory-mapped application RMM data for the peripheral 1000 stored in the memory space 3000 of the data processing device D.

In solutions as described herein, that very same driver module (left notionally untouched, with no appreciable software reworking involved) can operate based on the emulated application data EMM stored in the memory 300 of the emulating peripheral 100 starting from a new starting address that replaces the "original" starting address of memory-mapped data RMM of the physical peripheral that is being emulated.

In solutions as proposed herein a peripheral (a generic data transmission hardware peripheral, such as, for instance, a CAN peripheral 1000 provided with input/output, I/O pins see Tx and Rx in Figures 3 and 4) can be emulated via a likewise generic peripheral that is emulated via software (in a GTM).

A Generic Timer Module, GTM as exemplified herein can be regarded as a particular embodiment of a System Integration Unit Lite, SIUL, namely a module that controls MCU pad configuration, ports, general-purpose input and output signals and external interrupts with trigger event configuration.

As anticpated, while a Generic Timer Module, GTM 100 is primarily exemplified herein as an "emulating" peripheral, solutions as described herein can be implemented also with a SIUL (the SIUL referenced as 5000, for instance) as the emulating peripheral. When using a SIUL, the processor unit CPU ed the timer perform the function of the MCS 200 and the TBU 118 of the GTM.

Whatever specific implementation option is adopted, data exchange between the (at least one) peripheral (such as the peripheral 1000) and the processor unit CPU is emulated via an emulated replica (see EMM in Figure 3) of a register memory map (see RMM in Fguire 3) of the peripheral.

That feature facilitates emulating a peripheral (even if not physically available in a device D) without resorting to a new driver.

If the peripheral that is emulated is already "physically" present in the device the same driver can be used for the emulating peripheral. If the peripheral that is emulated is not already present in the device, solutions a proposed herein facilitate providing a driver for operating the emulating peripheral (like a physical peripheral) can be supplied to the user as an optional driver to use as desired: this may in fact be the same driver available for other verions of the device where that physical peripheral is provided.

Data exchange between the (at least one) peripheral and the processor unit CPU can be emulated in at least two different ways:
using the GTM 100 as the emulating peripheral in combination with the TBU 118 of the MCS block 200 to emulate timings plus a memory (such as the RAM 300) to store temporary data plus the driver residing in the NVM 400;
using a SIUL (such as the SIUL 5000) plus a timer T in the processing unit CPU to emulate the timings and using a memory (such as the RAM 3000) to store temporary data plus the driver residing in the NVM 4000.
Using a GTM 100 as the emulating peripheral may be advantageous in so far as a reduction of the computational load on the CPU is facilitated in addition to the register memory mapping feature: the GTM replaces the SIUL and the CPU in the task of emulating a peripheral taking advantage od the MCS included therein.

In fact, the functions performed by a peripheral can be generically divided into two macro-blocks:
exchange of peripheral data with respect to other parts of a microcontroller or with respect to external devices connected thereto;
exchange of data between the peripheral and a CPU.

This distinction can be clearly appreciated by referring to the source code for a peripheral in VHDL (namely VHSIC Hardware Description Language where VHSIC stands for Very High-Speed Integrated Circuit: VHDL is a programming language used to describe the structure and behavior of digital logic circuits) and/or Verilog (a hardware description language, HDL used to model electronic circuits used in the design and verification of digital circuits).

In fact, in this context SW code includes:
interface with "the rest of the world",
functional blocks,
interface blocks with the CPU.

The first partition above describes the signals that are used to connect the peripheral to other parts of a microcontroller or external devices connected thereto

The second partition covers actual data exchange functions.

The third partition covers how the CPU communicates and sets up the peripheral involved.

The CPU already implements a way to exchange data with the outside world, by writing and reading data into and from memory, and the same approach can be used to communicate with the peripherals.

The communication interface of these peripherals is composed of state registers mapped "as if" they were a memory visible at a certain address. In fact, there is an address area that the CPU sees as the common memory SRAM, but actually hosts the configuration registers of the peripheral.

As a consequence, the value of these registers and how they behave is not as in the case of an SRAM or flash memory: the behavior of these registers depends on what the designer has written in the source code to provide interface blocks with the CPU.

A behavior of the registers is thus implemented that changes from peripheral to peripheral and is implemented from time to time (in VHDL, for instance) just like the behavior of the peripheral in exchanging data.

It is observed that only the first macro-function of peripherals (or, to be more precise, only the management of the data flow in the former macro-block discussed above, namely exchange of peripheral data with respect to other parts of a microcontroller or with respect to external devices connected thereto) has been conventionally emulated, with the command interface and data flow re-worked in a proprietary way in order to meet the specifications of the peripheral that is used to emulate the peripheral in respect of that first macro-function.

Solutions as proposed herein emulate, in addition to that first macro-function, also the latter macro-block, namely exchange of data between a peripheral and a CPU, namely that part of source code of a peripheral that deals with managing the memory-mapped registers.

In that way, the behavior of the registers in a peripheral can be emulated (via a CPU, for instance): this facilitates replicating extensively (by way of example) a finite state machine, FSM that manages and governs the peripheral: a peripheral can in fact be regarded as a finite state machine, where the states are represented and stored in the registers in the peripheral registers. These registers can be read and written by a CPU, and can thus be changed autonomously by the part of the source code that manages the exchange of data between the peripheral and the CPU in such a way as to reflect (in a dynamic way) the state of the peripheral is at a given time of operation.

Emulating with a CPU the behavior of the registers of a peripheral essentially involves:
analyzing the source code that manages the exchange of data between the peripheral and the CPU;
replicating (as fully as possible, notionally 100%) the related behavior (as VHDL code, for instance); and
translating it into a code understandable by a CPU that, operating on the associated SRAM memory, "renders" it (that is, causes it to look like) exactly as a real peripheral mapped to the same addresses.

Advantageously, the workload of the CPU can be made lighter via the MCS feature(s) of a GTM, with these MCS feature(s) emulating the behavior of the registers of the peripheral that manage exchange of data with the CPU.

In that way, by operating on SRAM memory shared between the GTM and the core, the GTM may "render" it (that is, cause it to look like) exactly as a real peripheral mapped to the same addresses.

Solutions as described herein being used can be detected based on notionally zero effort being involved in porting body/gateway application SW across different platforms. This may be in response to a high level of software re-usability across devices, which does not rely on a fixed HW address map scheme.

Various applications suited to be implemented by simply reprogramming a GTM may provide further evidence that solutions as described herein are being used, which may also be proven by slow-speed peripherals functions are mapped within an SRAM in the GTM.

Similarly, with a GTM or a similar IP being present in a device, observing "low" peripherals being still working after GTM clock shutdown may indicate that the GTM is not used to emulate them.

Without prejudice to the underlying principles, the details and embodiments may vary, even significantly, with respect to what has been described by way of example only without departing from the extent of protection.

The extent of protection is determined by the annexed claims.

## Claims

1. A method of emulating via an emulating peripheral (100, 5000) at least one peripheral (1000) configured to be coupled to a data processing device (D) including a processor unit (CPU), wherein the method comprises:
emulating (T_{XEM}, R_{XEM}) data output (Tx) and data input (Rx) functions of the at least one peripheral (1000), and
emulating data exchange between the at least one peripheral (1000) and the processor unit (CPU) via an emulated replica (EMM) of a register memory map (RMM) of the at least one peripheral (1000).

2. The method of claim 1, wherein the data processing device (D) includes a Generic Timer Module, GTM (100) with Multi-Channel Sequencer, MCS (200), and the method includes:
producing, via input (TIM0, ..., TIMx) and output (TOM0, ...TOMy, ... TOMx; ATOM0, ..., ATOMx) modules within said GTM (100), emulating data output (T_{XEM}) and emulating data input (R_{XEM}) functions of the emulating peripheral (100), wherein the emulating data output (T_{XEM}) and emulating data input (R_{XEM}) functions emulate data output (Tx) and data input (Rx) functions of the at least one peripheral (1000), and
producing via said Multi-Channel Sequencer, MCS (200) in the Generic Timer Module, GTM (100) an emulated register memory map (EMM) of the emulating peripheral (100), wherein said emulated register memory map (EMM) includes said emulated replica (EMM) of the register memory map (RMM, 1000RMM) of the at least one peripheral (1000).

3. The method of claim 1 or claim 2, wherein the method comprises:
storing in memory space (300, 3000) of the data processing device (D) memory-mapped application (RMM) data for said at least one peripheral (1000), wherein said memory-mapped application data (RMM) are stored in said memory space (300, 3000) starting from a starting address of memory-mapped data, and
storing in memory space (300, 3000) of said emulating peripheral (100) emulated application data (EMM) that replicate the application data for said at least one peripheral (1000), wherein said emulated application data (EMM) are stored in said memory (300, 3000) of said emulating peripheral (100) starting from a new starting address that replaces said starting address of memory-mapped data (RMM).

4. The method of claim 3, wherein the data processing device (D) comprises a driver module (400, 4000) configured to operate based on said memory-mapped application (RMM) data for said at least one peripheral (1000) stored in said memory space (300, 3000) of the data processing device (D), wherein the method comprises operating said driver module (400, 4000) based on said emulated application data (EMM) stored in said memory (300, 3000) of said emulating peripheral (100) starting from a new starting address that replaces said starting address of memory-mapped data (RMM).

5. A data processing device (D) including a processor unit (CPU) configured to be coupled to at least one peripheral (1000), wherein the data processing device (D) includes emulating circuitry (100; 5000) of the at least one peripheral (1000), wherein the emulating circuitry (100) is configured to:
emulate (T_{XEM}, R_{XEM}) data output (Tx) and data input (Rx) functions of the at least one peripheral (1000), and
emulate data exchange between the at least one peripheral (1000) and the processor unit (CPU) via an emulated replica (EMM) of a register memory map (RMM) of the at least one peripheral (1000).

6. The data processing device (D) of claim 5, including a Generic Timer Module, GTM (100) with a Multi-Channel Sequencer, MCS (200), wherein the Generic Timer Module, GTM (100) is configured to:
produce, via input (TIM0, ..., TIMx) and output (TOM0, ...TOMy, ... TOMx; ATOM0, ..., ATOMx) modules within said GTM (100), emulating data output (T_{XEM}) and emulating data input (R_{XEM}) functions of the emulating peripheral (100), wherein the emulating data output (T_{XEM}) and emulating data input (R_{XEM}) functions emulate data output (Tx) and data input (Rx) functions of the at least one peripheral (1000), and
produce via said Multi-Channel Sequencer, MCS (200) in the Generic Timer Module, GTM (100) an emulated register memory map (RMM) of the emulating peripheral (100), wherein said emulated register memory map (RMM) includes said emulated replica (EMM) of the register memory map (RMM) of the at least one peripheral (1000).

7. The data processing device (D) of claim 5 or claim 6, comprising:
memory space (300, 3000) of the data processing device (D) configured to have stored therein memory-mapped application (RMM) data for said at least one peripheral (1000), wherein said memory space (300, 3000) is configured to have said memory-mapped application data (RMM) stored therein starting from a starting address of memory-mapped data,
memory space (300, 3000) of said emulating peripheral (100) configured to have stored therein emulated application data (EMM) that replicate the application data for said at least one peripheral (1000), wherein the memory space (300, 3000) of said emulating peripheral (100) is configured to have said emulated application data (EMM) stored therein starting from a new starting address that replaces said starting address of memory-mapped data (RMM).

8. The data processing device (D) of claim 7, comprising a driver module (400, 4000) configured to operate based on said memory-mapped application (RMM) data for said at least one peripheral (1000) stored in said memory space (300, 3000) of the data processing device (D), wherein said driver module (400, 4000) is configured to operate based on said emulated application data (EMM) stored in said memory (300, 3000) of said emulating peripheral (100) starting from a new starting address that replaces said starting address of memory-mapped data (RMM).

9. The data processing device (D) of any of claims 5 to 8, wherein the device comprises a microcontroller unit, MCU or a microprocessor unit, MPU.

10. A computer program product comprising instructions which, when the program is executed by a data processing device (D) including a processor unit (CPU), cause the data processing device (D) to carry out the method of any of claim 1 to 4.
